# EUROPEAN PATENT APPLICATION

(11) **EP 0 999 660 A1**
(43) Date of publication of application: **10.05.2000**
(21) Application number: 98309109.1
(22) Date of filing: 06.11.1998
(51) Int. Cl.: H04B 7/185, H04B 7/26

(54) **Data transmission for a mobile telecommunication system comprising a 60 bit modified V.110 frame without its synchronisation bit pattern**

(71) Applicant: ICO Services Ltd., London W6 9BN (GB)
(72) Inventor: Erskine, Donald James,, Highclere, Newbury,Berkshire,RG20 9SD (GB)
(74) Representative: Read, Matthew Charles

(57) **Abstract**

A data signal for a mobile telecommunications system, comprises a 60 bit modified V.110 frame, without its synchronisation bit pattern, which contains data bits corresponding to two individual conventional V.110 frames.

## Description

This invention relates to transmitting data signals in a mobile telecommunications system and has particular but not exclusive application to a satellite mobile telecommunications system in which data such as facsimile transmissions or e-mails are transmitted to and from remote user terminals such as mobile telephone handsets or other terminal equipment.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the Global System Mobile (GSM) network has become popular, whereas in USA, the Advanced Mobile Phone Service (AMPS) and the Digital American Mobile Phone System (DAMPS) are in use, and in Japan, the Personal Handiphone System (PHS) and the Personal Digital Communication (PDC) network are used. More recently, proposals have been made for a Universal Mobile Telecommunications System (UMTS). These networks are all cellular and land-based with transmitter/receivers which communicate with mobile user terminals.

Considering for example the GSM system, individual cells of the mobile network are served by a series of geographically spaced, terrestrial base station subsystems (BSS) which each comprise a base transceiver stations (BTS) which are coupled through base station controllers (BSCs) to a mobile switching centre (MSC) which may provide a gateway out of the network to a conventional public switched telephone network (PSTN). The PLMN includes a home location register (HLR) which stores information about the subscribers to the system and their user terminals (UTs). When a UT is switched on, it registers with the HLR. If the user roams to a different GSM network, the user terminal registers with a visitor location register (VLR) of the visited network, which communicates with the HLR of the home network for routing and other purposes. DAMPS, PHS and PDC networks have a generally similar architecture.

The telephone call is routed to the subscriber's UT through the MSC, to the BSC and then to the selected BTS, which provides a full duplex channel to the UT. The channel comprises a downlink channel from the BTS to the UT and an uplink channel from the UT to the BTS. The channels include time division multiple access (TDMA) time slots on different frequencies allocated on initiation of the call.

A number of different mobile telecommunication systems have been proposed that use satellite communication links to the mobile user terminals. One network known as the IRIDIUM ™ satellite cellular system is described in for example EP-A-0365885 and US Patent No. 5 394 561 (Motorola), which makes use of a constellation of so-called low earth orbit (LEO) satellites, that have an orbital radius of 780 km. Mobile user terminals such as telephone handsets are configured to establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). These orbits are also known as intermediate earth orbits (IEOs). The ICO ™ satellite cellular system as described in GB-A-2 295 296, is an example. With the ICO™ system, the satellite communication link does not permit communication between adjacent satellites and instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM.

In satellite communications networks, ground stations are located at different sites around the world in order to communicate with the orbiting satellites. In the ICO™ system and others, a visitor location register is associated with each of the satellite ground stations, which maintains a record of the individual user terminals that are making use of the particular ground station. Each satellite has an antenna which produces an array of spot beams directed towards the earth, that act as cells and correspond to the cells of a conventional terrestrial mobile network, although the cells produced by the spot beams sweep over the surface of the earth as the satellite moves in its orbit.

Referring again to the GSM system, the telephone call is directed over a dedicated traffic channel or TCH. Each TCH has an associated slow rate control channel or SACCH, which is interleaved with the TCH. These channels are described in more detail on pp 195 - 201 of "The GSM System for Mobile Communications" by M. Mouly and M-B. Pautet, 1992 Cell & Sys, ISBN: 2-9507190-0-7.

Also, the TCH can convey traffic other than speech i.e. data such as e-mails and facsimile transmissions. In order to handle this non-speech data traffic, the GSM system needs to be able to receive an asynchronous data stream from a PSTN or from a mobile user terminal, and convert it into a synchronous stream at a selectible rate for radio transmission in the TCH. The asynchronous data may for example be produced by a personal computing device with a modem which frequency modulates an audio carrier transmitted over the PSTN. In GSM, a data rate conversion scheme has been adopted which is closely based on the rate adaption conventionally used for coupling asynchronous data from a PSTN to an integrated service digital network (ISDN).

The International Telecommunication Union (ITU) Recommendation V.110 entitled "Support by an ISDN of data terminal equipments with V-series type interfaces", October 1996 defines a scheme by which an asynchronous data flow of 50 - 19200 bit/s is converted by a rate adaption function RA0 into a synchronous flow of 600 - 19200 bit/s. An intermediate rate adaption function RA1 converts the resulting synchronous flow to an intermediate synchronous rate of 8 or 16 kbit/s. A rate adaption function RA2 rate adapts the intermediate rate into a 64kbit/s synchronous stream for transmission through the ISDN. The resulting data is configured in 80 bit frames according to the V.110 Recommendations.

The format of the V.110 frame according to the ITU Recommendation is set out in Table 1

**Table 1**

| **Frame Structure** | | | | | | | | |
|---|---|---|---|---|---|---|---|---|
| Octet number | Bit Number | | | | | | | |
| | 1 | 2 | 3 | 4 | 5 | 6 | 7 | 8 |
| 0 | 0 | 0 | 0 | 0 | 0 | 0 | 0 | 0 |
| 1 | 1 | D1 | D2 | D3 | D4 | D5 | D6 | S1 |
| 2 | 1 | D7 | D8 | D9 | D10 | D11 | D12 | X |
| 3 | 1 | D13 | D14 | D15 | D16 | D17 | D18 | S3 |
| 4 | 1 | D19 | D20 | D21 | D22 | D23 | D24 | S4 |
| 5 | 1 | E1 | E2 | E3 | E4 | E5 | E6 | E7 |
| 6 | 1 | D25 | D26 | D27 | D28 | D29 | D30 | S6 |
| 7 | 1 | D31 | D32 | D33 | D34 | D35 | D36 | X |
| 8 | 1 | D37 | D38 | D39 | D40 | D41 | D42 | S8 |
| 9 | 1 | D43 | D44 | D45 | D46 | D47 | D48 | S9 |

According to V.110, the bits of the frame are labelled as follows:
D - used to transport data i.e. the data content of the sent message
E - used for synchronisation and timing correction of the transmitted bits of the frame
S - status bits i.e. the status of circuits of the sending terminal equipment
X - ready to send

Table 2 shows mapping between the circuit numbers and circuit names used in the ITU recommendations concerning data transfer between a terminal or computer (referred to a DTE in the IT recommendations) and a modem (or DCE). For further details reference is directed to "data communications, computer networks and open systems" F. Halsall Fourth Edition (ISBN 0-201-42293X) pp 82-83. In accordance with the recommendations, the S bits can be conveniently considered in terms of sub-groups SA and SB as follows:
SA ⇔ S1, S3, S6, S8 (circuits CT 107, 108)
SB ⇔ S4, S9 (circuits CT 105, 109)

**Table 2**

| **ITU circuit nomenclature** | | | |
|---|---|---|---|
| ITU-T No. | Circuit Name | Bit name | Function |
| CT 103 | TxD | D1-D24 | transmitted data |
| CT 104 | RxD | D1-D48 | received data |
| CT 105 | RTS | SB | request to send |
| CT 106 | CTS | X | clear to send |
| CT 107 | DSR | SA | DCE ready |
| CT 108 | DTR | SA | DTE ready |
| CT 109 | DCD | SB | received line signal (carrier) detector |

Referring back to Table 1, the conventional 80 bit V.110 frame includes a 17-bit frame synchronisation pattern which consists of all 8 bits (set to binary 0) of octet zero and bit one (set to binary 1) of the nine octets shown in Table 1.

In GSM, a modified scheme is used. The 17-bit frame synchronisation pattern of the V.110 frame is dispensed with, due to the fact that the GSM transmission itself provides satisfactory synchronisation. Also the 3 bits E1, E2 and E3 are not needed. Furthermore, only half of the data bits D1-D48 are used, since each data bit is sent twice in the conventional format and this duplication is not needed. Thus, the modified GSM frame contains a total of 36 bits. Further details of the modified frame are given in "The GSM System for Mobile Communications" ***supra,*** pp 177-178. However, this frame format suffers from the disadvantage that only 24 of the 36 bits of the frame are used to transport data and the remainder of bits have hitherto been considered necessary to maintain integrity of the transmitted data. The remainder i.e. the S, E and X bits of the modified V.110 frame, will be referred to herein as "control bits". The provision of such a large number of control bits in the frame results in a large overhead and hence lower data handling capacity than would be desired, particularly for a satellite telecommunications system where the signal handling capacity of the satellites imposes a constraint.

In accordance with the invention, data bits corresponding to two conventional V.110 frames are fitted into a single modified V.110 frame that has the conventional synchronisation bit pattern omitted.

With this configuration, it has been appreciated that at least some of the information conveyed by the control bits is not needed to provide satisfactory conveyance of data in a mobile telecommunications system and the modified frame may include fewer SA bits than for a corresponding conventional V.110 frame. In fact, the modified frame need not contain any SA bits.

The modified frame may include fewer SB bits than a corresponding conventional V.110 frame.

Also, the modified frame may include fewer X bits than a corresponding conventional V.110 frame.

The signal according to the invention may include first and second of said modified frames containing data bits corresponding to a multiframe structure of four conventional V.110 frames, and a single synchronisation bit in each of said modified frames to provide synchronisation information for the frames of the multiframe structure.

The control bits for the or each modified frame may include a set of clock compensation bits for controlling network independent clocking.

The invention also includes a method of performing rate adaption of data configured in conventional V.110 frames, comprising assembling the data bits from two individual conventional V.110 frames in a modified V.110 frame that has no synchronisation bit pattern.

Also included according to the invention is a method of performing rate adaption of data configured in a modified V.110 frame without its synchronisation bit pattern, which includes data bits corresponding to two individual conventional V.110 frames, the method comprising configuring the data bits corresponding to the two frames in respective conventional V.110 frames.

The invention also includes a rate adapter for data configured in conventional V.110 frames, comprising a processor configured to assemble the data bits from two individual conventional V.110 frames into a modified V.110 frame that has no synchronisation bit pattern.

For a reverse adaption, the invention includes a rate adapter for data configured in a modified V.110 frame without a synchronisation bit pattern, which includes data bits corresponding to two individual conventional V.110 frames, comprising a processor configured to assemble the data bits corresponding to the two frames in respective conventional V.110 frames.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a schematic frequency/time diagram illustrating time slots for the FDMA transmission scheme;
Figure 3 is a schematic block diagram of the circuits of satellite 3a;
Figure 4 is a schematic diagram of the cells produced by the spot beams produced by the satellite 3a;
Figure 5 is a schematic diagram of a mobile user terminal;
Figure 6 is a schematic block diagram of the circuits of the user terminal shown in Figure 5; and
Figure 7 is a schematic illustration of the rate adaptors used to send a data message through the network.

### Overview of network

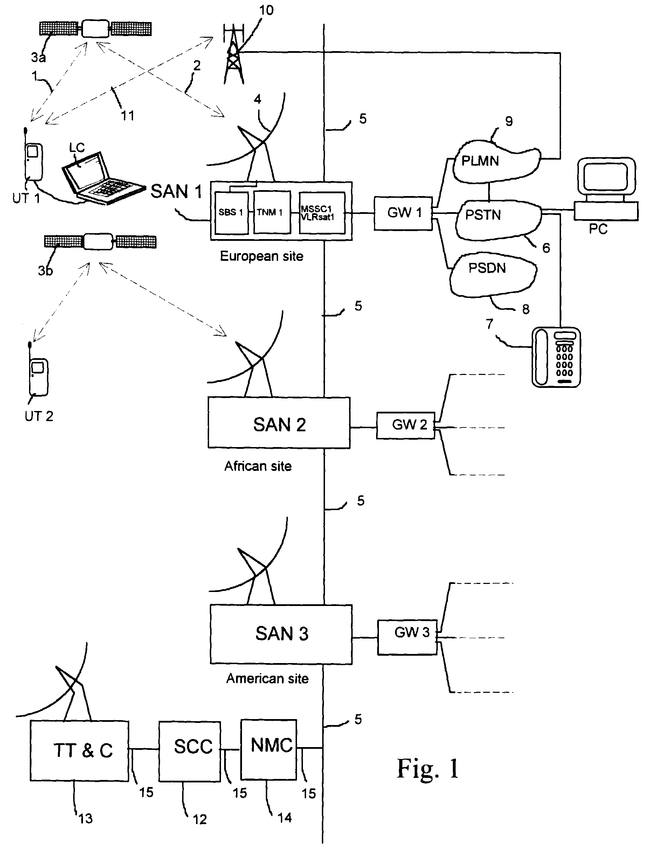

Referring to Figure 1, a schematic block diagram of a satellite mobile telecommunication network is shown corresponding to the ICO™ network. A mobile user terminal UT 1 in the form of a mobile telephone handset can communicate on a radio channel over a communication path 1, 2 via an earth orbiting satellite 3a with a land-based satellite access node SAN1. As shown schematically in Figure 1, SAN 1 is provided with an antenna 4 which can track the orbiting satellite. A laptop computer LC is shown connected to UT 1.

A number of the satellite access nodes SAN 1, 2, 3, etc are connected together to form a backbone network 5, which is connected through a number of gateways GW 1, 2, 3, etc to conventional land-based telephone networks. For example, the gateway GW1, is connected to a land-based public switch telephone network (PSTN) 6, which permits connection to be made to a conventional telephone set 7. Also a personal computer PC with a modem card (not shown) is connected to the PSTN 6. The PC is one example of terminal apparatus capable of sending data messages such as e-mails or facsimile transmissions through its modem as a pulse code modulated (PCM) audio tone in an asynchronous bit stream. The sending of such messages to the laptop computer LC connected to UT 1 will be described in more detail hereinafter.

The gateway GW1 is additionally connected to a public switch data network (PSDN) 8 which may comprise an ISDN, and a public land mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 can also communicate with the conventional land-based mobile network PLMN 9, which is shown schematically to include a transceiver station 10 that establishes a duplex link 11 with the user terminal UT 1. In this example, the PLMN 9 is a GSM network. For a fuller understanding of GSM, reference is directed to the various GSM Recommendations issued by the European Telecommunications Institute (ETSI). Also reference is directed to "The GSM System for Mobile Communications" ***supra,*** for a more readable overview.

The satellite network is designed to provide worldwide coverage and the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity. Additional satellites may be included in the constellation in order to provide further diversity and redundancy.

The satellites may be arranged in a MEO constellation, for example with an orbital radius of 10,355 km, although the invention is not restricted to a particular orbital radius. In this embodiment, satellites 3a, 3b are shown in a common orbit and the satellites are tracked by the antenna arrangement of each SAN. The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the five dish antennas 4 for tracking the satellites, the SBS 1 including transmitter and receiver circuits with amplifiers, multiplexers, demultiplexer and codecs. A mobile satellite switching centre MSSC 1 is coupled to SBS 1 and includes a satellite visitor location register VLR_{SAT} 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW1 so as to provide an output connection to PLMN 9, together with PSDN 8 and PSTN 6. The interchange of signals between SBS 1 and MSSC 1 is controlled by a terrestrial network manager TNM 1 in SAN 1.

The VLR_{SAT} 1 maintains a record of each of the subscribers currently registered, namely the identity of each user that is making use of the SAN 1 for signal communication. It will be understood that all the SANs are of similar construction with a respective VLR_{SAT} to maintain a record of the subscribers registered.

In Figure 1, the SAN 2 is shown communicating with user terminal UT 2 via satellite 3b. For further details of the network, reference is directed to GB-A-2 295 296 and EP-A-0869628 filed on 1st April 1997.

The satellites 3a, 3b are in non-geostationary orbits and comprise generally conventional hardware such as the Hughes HS 601. They may include features disclosed in GB-A-2 288 913. As explained in more detail hereinafter, each satellite 3a, 3b is arranged to generate an array of radio spot beams covering a footprint on the earth beneath the satellite, each beam including a number of different frequency channels and time slots as described in GB-A-2 293 725. The spot beams thus provide adjacent cellular areas which correspond to the cells of a conventional land-based mobile telephone network.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

### Channel Configuration

Each of the handsets communicates during a telephone call, with a respective SAN via one of the satellites. Thus for example, handset UT 1 communicates with SAN 1 via satellite 3a via paths 1, 2 shown in Fig. 1. A full duplex communication path is provided between the UT and the SAN. Communication from the SAN to the UT via the satellite is referred to as a "downlink", and communication directed from the UT via the satellite to the SAN is referred to as an "uplink".

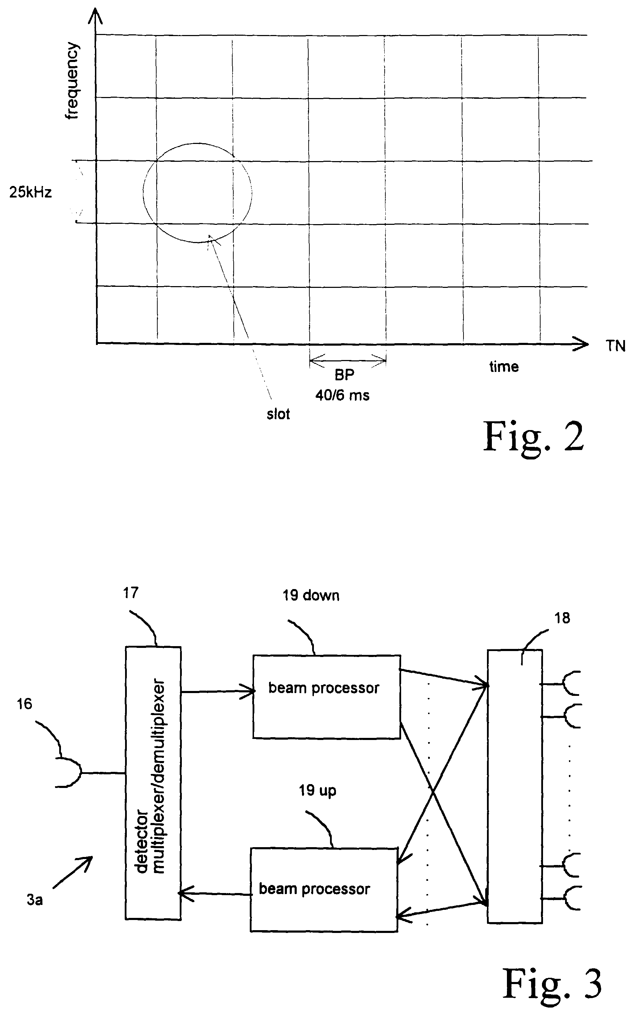

The general configuration of the transmitted signals is in some respects similar to those used for conventional GSM transmissions in a PLMN and makes use of a frequency diverse time division multiple access (TDMA) scheme. Referring to Figure 2, the basic unit of transmission between the SAN and UT is a series of about 100 modulated digital bits, which is referred to as a burst. Bursts each have a finite duration and occupy a finite part of the radio spectrum. Thus, they are sent in time and frequency windows which are referred to as slots. The slots are positioned every 25 kHz and recur in time every 40/6 ms. In the time domain, the slots are given a timeslot number TN The duration of each slot is referred to as a burst period or BP. A graphical representation of a slot in the time and frequency domain is shown in Figure 2.

The signal transmission scheme includes channels for providing communication between the UTs individually and one of the SANs via a satellite, together with a number of common channels for all UTs within the cell defined by a particular satellite spot beam.

For speech transmission, data is sent on an individual traffic channel TCH. Each TCH is provided with an associated slow rate control channel or SACCH. Each TCH consists of one slot every 6 BP and comprises a cycle of 25 slots. The SACCH is multiplexed in blocks each consisting of 12 consecutive slots. Two SACCH blocks are transmitted for every 25 slot cycle of the TCH and the remaining slot is used to transmit a timing reference so as to make up a 25 slot SACCH message for each 25 slot cycle of TCH. The TCH/SACCH is transmitted when the UT is in dedicated mode i.e. during a call.

A TCH/SACCH is also used for the communication of data messages between UT 1 and SAN 1, such as facsimile transmissions and e-mails as will be explained in more detail later.

In addition to the channels TCH/SACCH for the individual UTs, a number of common channels are provided for all UTs within each cell corresponding to one of the satellite's spot beams, For example, a broadcast control channel BCCH is broadcast from the satellite to all UTs within a particular cell. The BCCH provides information which identifies the cell to the UT, which is received by the UT in idle mode i.e. when no call is being made.

### Satellite

A schematic diagram of the major signal processing components of the satellite is given in Figure 3. Signals transmitted from one of the SANs are received by antenna 16 and directed to a detector/multiplexer/demultiplexer circuit 17. It will be understood that the signals transmitted from the SAN to the satellite contains a large number of TCH/SACCHs that are to be directed to individual UTs by the satellite. To this end, the satellite includes a plurality (for example 163) of antennas 18 that produce individual spot beams that correspond to a cellular configuration as previously described. A beam forming processor circuitry configuration 19_{down} receives the various TCH/SACCHs that are demultiplexed by circuit 17 and assembles them into multiplexed signals directed on 163 outputs to the spot beam antennas 18. The circuitry 19_{down} is also configured to include the downlink common control channels for each of the spot beams, including the BCCH, on the basis of data transmitted to the satellite from the SAN. The signals transmitted between the satellite and the cells may be of a frequency in the 2GHz range.

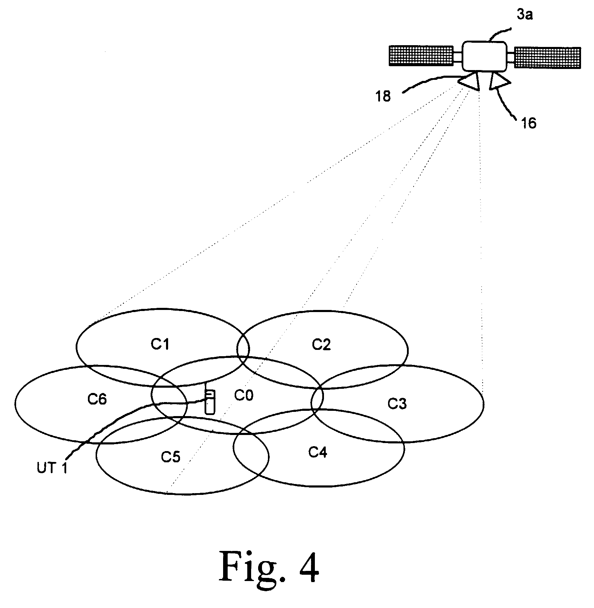

An example of cells C0 - C6 produced by the footprints of seven of the 163 spot beams from antenna 18 is shown schematically in Figure 4. The user terminal UT 1 lies within cell C0 but also can monitor the BCCHs of adjacent cells C1 - C6 and cells produced by other satellites that are within range (not shown).

It will be understood that the foregoing description of the satellite circuitry is schematic and for further details, reference is directed to GB-A-2 288 913 ***supra***.

### User terminal (UT 1)

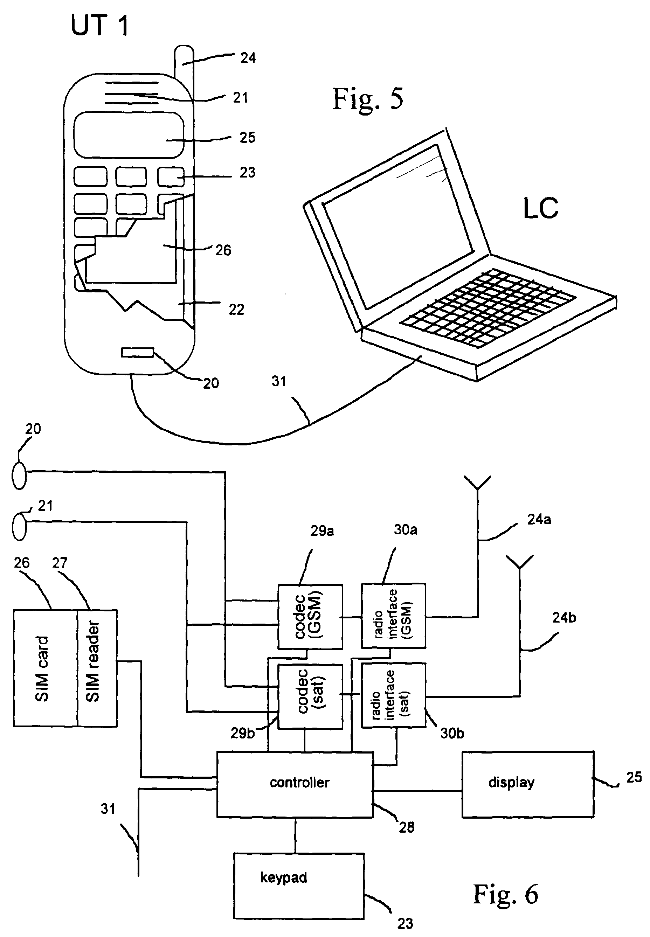

The mobile user terminal UT 1 is shown in more detail in Figures 5 and 6. It comprises a hand held device which is generally similar to a mobile telephone used for conventional terrestrial digital networks. It is powered by a rechargeable battery (not shown) and is configured to operate with either the local terrestrial cellular network or to roam to the satellite network. As shown in Figure 4, the handset comprises a microphone 20, a loudspeaker 21, a battery 22, a keypad 23, antennas a, 24b and a display 25, typically a liquid crystal display panel. The handheld unit UT 1 also includes a subscriber identification module (SIM) smartcard 26. The circuit configuration of the handset UT 1 is shown in block diagrammatic form in Figure 5. The SIM card 26 is received in an SIM card reader 27 coupled to a controller 28, typically a microprocessor. The microphone and loudspeaker 20, 21 are coupled to first and second codecs 29a, 29b, coupled to conventional radio interfaces 30a, 30b connected to the antennas 24a, 24b so as to transmit and receive communication signals, in a manner well known ***per se***. The handset is capable of dual mode operation, with the codec 29a, radio interface 30a and antenna 24a being used with the GSM PLMN 9, and corresponding circuits 29b, 30b and 24b being used with the satellite network. The user terminal UT 1 can thus handle speech through either network using the microphone and loudspeaker 20, 21.

Also, UT 1 can handle non-speech data messages such as SMS, facsimile and e-mail, through either the satellite network or the PLMN 9, with received messages from the radio interfaces and codecs 29, 30 being processed by the controller 28. SMS messages can be displayed on the display 25. Outgoing SMS messages can be composed using the keypad 23, and displayed on the display 25 prior to transmission, or used in other ways, in a manner known *per se.*

Received data messages for the laptop computer LC are ported onto connection 31 from the controller 28 and similarly, data from the LC to be transmitted by the UT is fed through connection 31 to the controller 28 and then to the appropriate codec and radio interface 29, 30. As will be explained in more detail hereinafter, the controller 28 performs a rate adaption function on the data fed to and from the laptop LC.

### Service provision

The described network can provide service to customers in a number of different ways. For example, communication may be provided from UT 1 to UT 2 using the satellite backbone network 5. Alternatively, telephone communication can be established between the telephone set 7 and UT 1 either via SAN 1 and satellite 3a, or, through PLMN 9, antenna 10 and link 11. For a further description of service options, reference is directed to our EP-A-0869628.

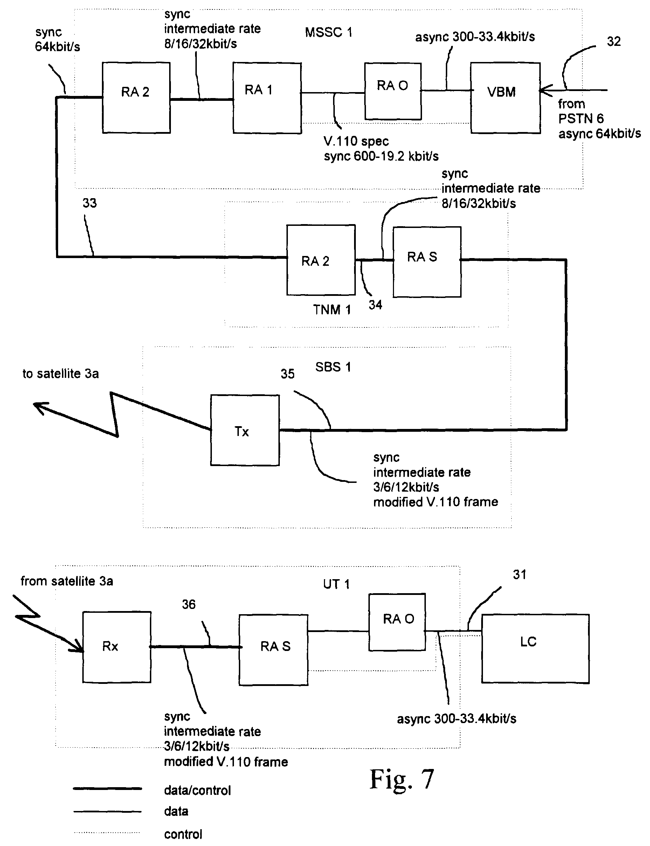

The network can be used to be used to send data messages. In the following, the transmission of data message such as a facsimile or e-mail, from the PC to the laptop LC through PSTN 6, SAN 1, satellite 3a and UT 1, will be considered in detail with reference to Figure 7.

### Data message transmission

As previously explained, the modem in the PC shown in Figure 1, produces an asynchronous PCM stream of data in a manner known ***per se**.* The signals are directed through the PSTN 6, the gateway GW 1 to the MSSC 1 of SAN 1 shown in Figure 1. Referring to Figure 7, the signals are received on line 32 and typically comprise a 64kbit/s PCM data stream. This is fed to a voice band modem VBM which demodulates the audio tone to produce a corresponding asynchronous 300-33.4 kbit/s data stream.

The MSSC 1, as previously explained, is operative to switch calls and hence has the capability to perform data processing on signals routed through it.

The data processing capability is used to perform rate adaption functions according to the V.110 ITU recommendation. As shown in Figure 7, rate adaption function RA0 and RA1 are performed on the incoming data. Rate adaption function RA0 produces a synchronous 600-19200 bit/s stream, which is convened to an intermediate synchronous rate of 8/16/32 kbit/s data stream by the rate adaption function RA1. In a modification where the incoming data is already synchronous, the rate adaption function RA0 can be omitted.

The V.110 rate adaption function RA2 is then performed to convert the intermediate rate data into synchronous 64kbit/s data stream, which is fed over an ISDN link 33 to TNM 1. Here, the synchronous 64kbit/s stream is subject to an inverse rate conversion RA2 back to an intermediate bit rate stream of 8/16/32 kbit/s. The intermediate stream is fed on line 34 to TMN 1. The data is thus configured in 80 bit frames according to the V.110 ITU Recommendations.

At TMN 1, the synchronous intermediate rate data is subject to a rate conversion in accordance with the invention into a modified V.110 frame at an intermediate rate of 3, 6 or 12 kbit/s, referred to herein as rate adaption RAS, which is described in more detail hereinafter. The resulting data is fed on line 35 to the transmitter Tx of SBS 1, which assembles an appropriate TCH/SACCH and transmits it via satellite 3a to user terminal UT 1.

As shown in Figure 7, user terminal UT 1 performs a terminal adaptation function (TAF). Receiver circuits Rx of the user terminal UT 1 receive and decode the data stream at the intermediate rate in the modified V.110 frame according to the invention and supply this synchronous data on line 36 to a rate adaptor which performs an inverse rate adaption RAS, to convert the data into a synchronous stream at 600-19200bit/s, in the conventional V.110 80 bit frame format. The resulting synchronous data is then subject to an inverse rate adaption function RA0 according to the V.110 Recommendations, so as to produce an asynchronous 300-33.4kbit/s output, which is fed to line 31 for onward transmission to the laptop computer LC. The data on line 31 is thus in a format compatible with the processing circuits of the LC, suitable for conversion to TCP-IP or other data processing protocols. It will be understood that for messages transmitted in a reverse direction from the laptop computer LC to the PC, the rate conversion scheme just described will be performed in an inverse manner.

### Intermediate rate adaptation RAS

As previously explained, the rate adaptor RAS used in TNM 1 and UT 1 makes use of a modified V.110 frame.

The conventional V.110 frame comprises an 80 bit sequence as shown in Table 1. The modified V.110 frame according to the invention contains 60 bits. The conventional 17 bit synchronisation pattern is omitted together with bits E1, E2 and E3, in the manner previously described in relation to the modified V.110 frame used for GSM.

Thus, 20 bits are omitted resulting in a 60 bit frame. In the conventional frame, there are 48 data bits D. However, only 24 data bits D are needed per frame when transmitting at 2400 kb/s. In accordance with the invention, data bits corresponding to two conventional V.110 frames are included within the modified, 60 bit frame thus using up all of the 48 data bit positions D.

The remaining 12 bit positions are used for synchronisation. In accordance with the invention, it has been appreciated that the SA bits are not needed. These bits signify DTR on, namely that the DTE is ready to receive data. This condition is implicit when a telecommunications link is established and consequently, the SA bits can be omitted from the frame.

Also, it has been found that the SB bits can be sampled at a slower rate than with a corresponding conventional 80 bit V.110 frame. Similarly, the X bits can be sampled at a lower rate. The resulting 60 bit modified frame in accordance with the invention is shown in Table 3.

**Table 3**

| | | | | | | |
|---|---|---|---|---|---|---|
| D1 | D2 | D3 | D4 | D5 | D6 | E7 |
| D7 | D8 | D9 | D10 | D11 | D12 | X |
| D13 | D14 | D15 | D16 | D17 | D18 | SB |
| D19 | D20 | D21 | D22 | D23 | D24 | c1 |
| c2 | c3 | c4 | c5 | D25 | D26 | D27 |
| D28 | D29 | D30 | SB | D31 | D32 | D33 |
| D34 | D35 | D36 | X | D37 | D38 | D39 |
| D40 | D41 | D42 | SB | D43 | D44 | D45 |
| D46 | D47 | D48 | SB | | | |

The rate conversion function RAS in UT1 shown in Figure 7 converts the modified frame shown in Table 3 into two successive, individual conventional V.110 80 bit frames as shown in Table 4.

**Table 4**

| Frame 1 | | | | | | | |
|---|---|---|---|---|---|---|---|
| 0 | 0 | 0 | 0 | 0 | 0 | 0 | 0 |
| 1 | D1 | D1 | D2 | D2 | D3 | D3 | S1 |
| 1 | D4 | D4 | D5 | D5 | D6 | D6 | X |
| 1 | D7 | D7 | D8 | D8 | D9 | D9 | S3 |
| 1 | D10 | D10 | D11 | D11 | D12 | D12 | S4 |
| 1 | E1 | E2 | E3 | E7 | E5 | E6 | E7 |
| 1 | D13 | D13 | D14 | D14 | D15 | D15 | S6 |
| 1 | D16 | D16 | D17 | D17 | D18 | D18 | X |
| 1 | D19 | D19 | D20 | D20 | D21 | D21 | S8 |
| 1 | D22 | D22 | D23 | D23 | D24 | D24 | S9 |

| Frame 2 | | | | | | | |
|---|---|---|---|---|---|---|---|
| 0 | 0 | 0 | 0 | 0 | 0 | 0 | 0 |
| 1 | D25 | D25 | D26 | D26 | D27 | D27 | S1' |
| 1 | D28 | D28 | D29 | D29 | D30 | D30 | X' |
| 1 | D31 | D31 | D32 | D32 | D33 | D33 | S3' |
| 1 | D34 | D34 | D35 | D35 | D36 | D36 | S4' |
| 1 | E1' | E2' | E3' | E4' | E5' | E6' | E7' |
| 1 | D37 | D37 | D38 | D38 | D39 | D39 | S6' |
| 1 | D40 | D40 | D41 | D41 | D42 | D42 | X' |
| 1 | D43 | D43 | D44 | D44 | D45 | D45 | S8' |
| 1 | D46 | D46 | D47 | D47 | D48 | D48 | S9' |

The mapping function performed by the RAS in the user terminal UT1 is shown in Table 5

**Table 5**

| Bit | Function | Usage from DTE | Action for RAS |
|---|---|---|---|
| | | | |

| Frame 1 | | | |
|---|---|---|---|
| S1 | SA | DTR | Discard |
| X | Sync | Frame Sync indication | Map to 1st X bit of 60 bit frame |
| S3 | SA | DTR | Discard |
| S4 | SB | RTS | Map to 1st SB bit of 60 bit frame |
| E4 | c1 | NIC | |
| E5 | c2 | NIC | |
| E6 | not used | not used | Discard |
| E7 | Multiframe Sync | Multiframe Sync | |
| S6 | SA | DTR | Discard |
| X | Sync | Frame Sync indication | Discard |
| S8 | SA | DTR | Discard |
| S9 | SB | RTS | Map to 2nd SB bit of 60 bit frame |

| Frame 2: | | | |
|---|---|---|---|
| S1' | SA | DTR | Discard |
| X' | Sync | Frame Sync indication | Map to 2nd X bit of 60 bit frame |
| S3' | SA | DTR | Discard |
| S4' | SB | RTS | Map to 3rd SB bit of 60 bit frame |
| E4' | c3 | NIC | |
| E5' | c4 | NIC | |
| E6' | c5 | NIC | |
| E7' | Multiframe Sync | Multiframe Sync | Discard |
| S6' | SA | DTR | Discard |
| X' | Sync | Frame Sync indication | Discard |
| S8' | SA | DTR | Discard |
| S9' | SB | RTS | Map to 4th SB bit of 60 bit frame |

The data is transmitted in a multiframe structure comprising four successive frames which are labelled MF0a, MF1a, MF0b, MF1b. Thus, E7 can be defined as follows:

**Table 6**

| 60-bit Frame | E7 |
|---|---|
| MF0a & MF0b | 0 |
| MF1a & MF1b | 1 |

Thus, only one value of E7 is required for each 60 bit frame shown in Table 3 and the same value can be assigned to the two conventional frames assembled from it shown in Table 4. Thus, the bit E7' can be discarded as shown in Table 5. It will be understood that other mappings of E7 to different multiframe structures fall within the scope of the invention and Table 6 is just one example.

The bits c1, c2, c3, c4 and c5 are used to perform network independent clocking (NIC). This allows timing compensation to be carried out as shown in Table 7.

**Table 7**

| | c1 | c2 | c3 | c4 | c5 |
|---|---|---|---|---|---|
| No compensation | 1 | 1 | 1 | 1 | 1 |
| Negative compensation | 1 | 0 | 0 | 1 | 0 |
| Positive compensation of zero | 0 | 1 | 0 | 0 | 1 |
| Positive compensation of one | 0 | 0 | 1 | 0 | 0 |

When negative compensation is indicated, one less user data bit than normal is transmitted in the affected frame. Negative compensation causes the receiver (UT1) to delete the user data bit occupied by bit position D25 since at the transmitter end, this bit is set to binary 1 and is not actually used for user data.

When positive compensation is indicated, one additional user bit is transferred by means of the code defined by its c1-c5, which is inserted between user data bits D24 and D25 at the receiver end.

It will be understood that the rate adaption function RAS performed in TMN 1 of Figure 7 operates in an inverse manner to that just described, so as to assemble a modified 60 bit V.110 frame according to the invention from two successive conventional V.110 80 bit frames from RA2 on line 34. Furthermore, it will be understood that when data is transmitted from the laptop computer LC to the computer PC, in a reverse direction, an inverse coding scheme to that just described, will be performed.

The invention is not restricted to the described satellite channels and can be used with conventional GSM, or other known mobile protocols, for example with the PLMN 9 over the link 11 shown in Fig. 1. The invention also can be used with other satellite systems such as the IRIDIUM system discussed hereinbefore. Whilst in the described example a laptop LC is shown connected to a mobile telephone, it is possible to use an integrated telephone and personal organiser which can perform the functions of a laptop and a telephone in a single hand-portable unit. Also, although the user terminals have been described as mobile, it will be understood that they may be semi-mobile, e.g. mounted on a ship or aircraft, and may actually be stationary during operation.

## Claims

1. A data signal for a telecommunications system, comprising a signal carrier modulated to provide a modified V.110 frame without its synchronisation bit pattern **characterised in that** the frame includes data bits corresponding to two individual conventional V.110 frames.

2. A signal according to claim 1 wherein the modified frame includes SA bits fewer in number than for a corresponding conventional V.110 frame.

3. A signal according to claim 1 or 2 wherein the modified frame does not contain any SA bits.

4. A signal according to any preceding claim wherein the modified frame includes SB bits fewer in number than for a corresponding conventional V.110 frame.

5. A signal according to any preceding wherein the modified frame includes X bits fewer in number than for a corresponding conventional V.110 frame.

6. A signal according to any preceding claim including first and second of said modified frames containing data bits corresponding to a multiframe structure of four conventional V.110 frames, and a single synchronisation bit (E7) in each of said modified frames to provide synchronisation information for the frames of the multiframe structure.

7. A signal according to any preceding claim wherein the or each said modified frame includes a set of clock compensation bits (c1 - c5) for controlling network independent clocking.

8. A method of performing rate adaption of data configured in conventional V.110 frames, comprising assembling the data bits from two individual conventional V.110 frames in a modified V.110 frame that has no synchronisation bit pattern.

9. A method of performing rate adaption of data configured in a modified V.110 frame without its synchronisation bit pattern, which includes data bits corresponding to two individual conventional V.110 frames, the method comprising configuring the data bits corresponding to the two frames in respective conventional V.110 frames.

10. A rate adapter for data configured in conventional V.110 frames, comprising a processor configured to assemble the data bits from two individual conventional V.110 frames into a modified V.110 frame that has no synchronisation bit pattern.

11. A rate adapter for data configured in a modified V.110 frame without a synchronisation bit pattern, which includes data bits corresponding to two individual conventional V.110 frames, comprising a processor configured to assemble the data bits corresponding to the two frames in respective conventional V.110 frames.

12. A mobile telecommunications network including a rate adapter according to claim 10 or 11.

13. A mobile user terminal for a telecommunications system, including a rate adapter according to claim 10 or 11.

14. A satellite ground station including a rate adapter according to claim 10 or 11.
